Europäisches Patentamt

European Patent Office

Office européen des brevets

(19)

(11) Publication number: **0 124 470**
**A1**

(12) # EUROPEAN PATENT APPLICATION

(21) Application number: **84630068.9**

(22) Date of filing: **27.04.84**

(51) Int. Cl.³: **B 65 D 23/00**

(30) Priority: **27.04.83 US 489278**
**27.04.83 US 489277**

(43) Date of publication of application: **07.11.84**
**Bulletin 84/45**

(84) Designated Contracting States: **DE FR GB IT**

(71) Applicant: **COSDEN TECHNOLOGY, INC., 100 West 10th Street, Wilmington Delaware (US)**

(72) Inventor: **Fortuna, Vincent E., 16412 LaDona Circle, Huntington Beach California 92649 (US)**

(74) Representative: **Schmitz, Jean-Marie et al, Office Dennemeyer S.à.r.l. 21-25 Allée Scheffer P.O. Box 41, L-2010 Luxembourg (LU)**

(54) **Process for making containers.**

(57) A multi-segment thermoplastic container is disclosed having an injection/blow-molded thermoplastic body and a thermoplastic base cup welded to the body.

A process for manufacturing containers is also described wherein the containers are formed in two separate pieces by means such as injection/blow molding and are later fused together by means such as friction-welding to form a single integral container package.

EP 0 124 470 A1

## PROCESS FOR MAKING CONTAINERS

The present invention relates generally to the manufacture of thermoplastic containers and more particularly discloses a process for forming a single container from two separate container sections. The invention is particularly advantageous in the manufacture of the one- and two-liter PET (polyethylene terephthalate) type of bottles wherein the main bottle portion has been blow molded from a parison which was injection molded prior to the bottle forming step. In conventional one- and two-liter bottles the bottle is formed in a multi-stage process wherein a parison is first formed by injection molding, cooled, and then blow molded into a semi-final bottle configuration. Because of the inherent structure required for strength in a blow molded bottle, the main bottle portion must have a rounded bottom or similar type of bottom to provide sufficient strength to contain pressurized products. In such case a base cup must be added to the bottle to provide stability and additional strength for the container. In the prior art methods this base cup is generally attached to the bottle portion by either gluing or by heat fusion. The deficiencies of these prior art methods allow a large number of failures wherein the bottle separates from the base cup and becomes highly unstable and many times produces a "leaker" on the bottling line or during shipping. The leaker will allow the bottled product to leak from the container and contaminate the filling line and/or the shipping facilities. Because of the inherent weakness of glued joints between the two thermoplastic sections and the inherent weakness of fused joints, the conventional bottle-making procedures continue to undergo a high rate of defects and failures. In addition to leakers, the conventional method of bottle manufacture also often results in canting the base cup on the bottle, resulting in an esthetically unacceptable bottle and a poor attachment of the base cup.

The present invention overcomes the deficiencies of the prior art methods of forming multi-piece bottles by providing a process of attaching a base cup to a blow molded plastic bottle wherein the base cup is attached by friction-welding means to provide a joint which is stronger than the surrounding plastic itself.

Figure 1 illustrates a cross-sectional side view of a thermoplastic bottle parison.

Figure 2 illustrates a cross-sectional diagramatic sketch of a spin-welding mandrel for receiving the bottle components.

Figure 3 illustrates a cross-sectional side view of a bottle formed by the process of this invention.

The present invention discloses means for forming a multi-piece or segmented thermoplastic bottle such as those commonly used today to package one- and two-liter quantities of carbonated beverages. Because of the necessity of a domed bottom, the bottle does not have positional stability after it is formed. Bottle makers must add a base cup to the blow molded bottle to provide a stable base and to protect the bottom end of the bottle during shipping and storage.

In forming the conventional multi-segment bottle, the main bottle portion is formed in a dual stage process. In stage one, a thermoplastic material such as PET is injection-molded in a die to form a parison 10. This comprises a thick-walled body portion 11 at the top of which is located a threaded cap portion 12. After the parison is injection-molded in a desirable injection die, it is removed from the die and cooled slighly to solidify. The parison is then placed in a blow molding machine where high-pressure air is blown into the parison internal bore 13 as the parison is heated up into its glass transition stage. The combination of the heating of the thermoplastic material and the pressurized gas in the interior of the parison blows the bottle out into the mold cavity to form the final bottle shape. This blow molded bottle is then cooled and the second stage of the bottle manufacture must be performed.

Because of the inherent nature of a blow molded bottle, i.e., the bottom structure is generally a domed or

4

hemispherical shape for strength and pressure resistance, the bottle is unable to stand alone. A base cup or bottom cap must be formed by means such as injection molding and attached to the rounded bottom of the bottle to stabilize it. Generally, base cups are manufactured from a scrap or recycled plastic material because the material does not contact the contents of the bottle and the chemical make-up of the material is relatively unimportant. Generally the base cup is made of an opaque dark material such as black or brown thermoplastic and is attached to the bottle by gluing. The bottle itself, since it must come into contact with products destined for human consumption, is subject to strict FDA requirements as to the plastic content.

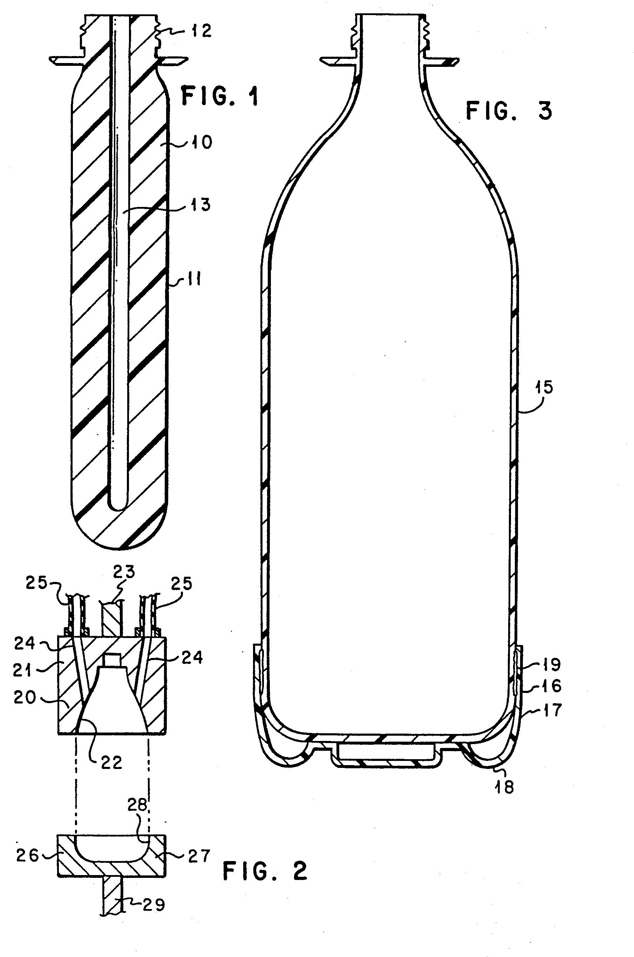

Generally the most desirable material for bottle manufacture is PET. Thus, in a conventional process a PET bottle is blow molded and receives a recycled or scrap plastic base cup. In the present invention the blow molded bottle 15 (Figure 3) receives a thermoplastic base cup 16 which is a generally cylindrical thermoplastic section 17 having a relatively flat circular bottom portion 18 integrally molded thereon. Base cup 16 is attached to bottle 15 at a large interface area 19 by means of friction-welding. Preferably since the circular, cylindrical, and hemispherical, nature of the components lend themself well to rotational spin-welding, a spin-welding attachment of the base cup to the bottle may be achieved. Alternatively, the base cup can be friction-welded in an oscillatory motion rather than a rotational motion. This would be particularly advantageous for non-circular bottle configurations.

Figure 2 illustrates in diagrammatic outline a set of mandrels for use in a friction-welding machine. In Figure 2 an upper mandrel 20 comprises a generally solid metalic block 21 having an interior cavity 22 of the same general size and shape as the exterior of bottle 15. Upper mandrel block 20 is rigidly attached to a movable shaft 23 which generally is vertically slidable for receiving and ejecting bottles to be welded. One or more vacuum/air channels 24 are formed through the upper wall of block 20 and connect to vacuum/pressure lines 25 which in turn lead to and communicate with alternating sources of vacuum and air pressure.

A second, lower friction-welding mandrel 26 is located directly below mandrel 20 and comprises a generally solid metalic block 27 having an internal cavity 28 sized for tight-fitting engagement around a base cup 16. A friction-welding driveshaft 29 is integrally attached to the bottom of lower block 26. Mandrel 26 and shaft 29 are adapted for vertical sliding movement toward and away from upper mandrel 20. Shaft 29 may also be driven rotatably by means such as electric, pneumatic, or hydraulic motors (not shown). A particular structure of the spin-welding machinery in which the mandrels 20 and 26 may be utilized is more clearly disclosed in a previous patent, Re 29,448, which patent is hereby incorporated by reference into this application in its entirety. Whereas the aforementioned incorporated reference relates to rotational spin-welding, apparatus particularly useful for oscillatory friction-welding is disclosed in copending U.S. patent application serial number 371,364 filed April 23, 1982 by

6

this inventor and Donald N. MacLaughlin, titled "Apparatus for Oscillatory Bonding"; which pending application is hereby incorporated by reference in its entirety into the present application.

Thus in typical operation and referring in particular to Figure 2, an injection/blow molded bottle 15 having no base cup is placed into the upper mandrel 20 in relatively snug-fitting engagement therein. The retention of bottle 15 in mold 20 may be aided by provision of a vacuum source through lines 25 and passages 24. This vacuum secures bottle 15 in the mold so that the base cup can be attached thereto by friction-welding. A base cup such as that shown in Figure 3 at 16 is snuggly engaged in lower mandrel 26 while mandrel 26 is spaced apart from mandrel 20 a sufficient distance to allow the presence of bottle 15 in mandrel 20 and the location of base cup 16 into mandrel 26. After the base cup has been securely located in lower mandrel 26 and while bottle 15 is being held by vacuum in upper mandrel 20, shaft 29 is moved vertically upward until the base cup is in close proximity to the bottle. In one particular embodiment the bottle and base cup were both cyclindrical in nature and spin-welding means were used for the joining of the base cup to the bottle. The base cup is spun at high speeds by rotating shaft 29 and mandrel 26. Upon reaching a predetermined desirable rotational speed, the mandrel 26 is then moved upward to move base cup 16 into frictional contact with bottle 15. It should be noted at this point that for desirable spin-welding/friction- welding results, the base cup should be sized for a slight interference fit upon bottle 15. Also it should be noted that for maximum fusion between the two elements, the primary material content in the base cup should be compatible with the material of the bottle.

After a desirable rotational speed has been achieved in mandrel 26, mandrel 26 is moved upward by means of shaft 29 to engage base cup 16 on bottle 15 whereby the heat of friction generated between the two components is sufficient to friction-weld the components together. As disclosed in the aforementioned reissue patent, the drive means on the rotating mandrel may be released prior to engagment of the two pieces to be welded together and the inertial energy, which has been precalculated based upon the rotational speed of the mandrel, the mass of the mandrel, and the mass of the base cup, is sufficient to obtain an optimum friction-welded joint 19.

After the mandrel and base cup have ceased spinning and the weld 19 has been completed, the vacuum supplied through lines 25 and passages 24 may be reversed by well known and conventional means to provide a positive air pressure therethrough for ejecting the completed bottle from the upper mandrel 20. This is performed slightly after mandrel 26 has been lowered away from the spin-welded container and is clear of the ejected bottle.

In an alternate embodiment relating to the aforementioned incorporated application, the base cup may be attached to the bottle by a non-rotational friction-welding process utilizing oscillatory motion rather than rotational motion. In this embodiment the bottle 15 is secured in the upper mandrel 20 in the identical manner to the previous method. Likewise base

8

cup 16 is secured in lower mandrel 26 by a tight-fitting frictional engagment therein. At this time upward movement of shaft 29 engages cup 16 on bottle 15 in a tight-fitting slight interference fit thereon. Attachment of the cup to the bottle is distinguished from the previous method by the fact that the lower mandrel and base cup are not rotated but rather an oscillatory motion is induced in the lower mandrel and base cup to generate a frictional heat between the two components and thus result in attachment of the base cup to the bottle. At the time enough heat has been generated to fuse the two pieces together they will fuse together and the base cup will become separated from the lower mandrel. A predetermined oscillatory frequency and duration may be determined by calculation or experimentation to provide an optimum friction-weld between the components.

Thus the present invention discloses processes and apparatus for providing a very efficient and effective method of attaching base cups to bottle components. A bottle manufactured according to the present invention was destructively tested by destroying the bottle and measuring the effectiveness of the joint between the two welded components. It was found that the weld area was stronger than the surrounding virginal thermoplastic material as the weld was the last portion of the bottle to fail under destructive testing.

Although a specific preferred embodiment of the present invention has been described in the detailed description above, the description is not intended to limit the invention to the particular forms or embodiments disclosed therein since they are to be recognized as illustrative rather than restrictive and it will be obvious to those skilled in the art that the invention is not so limited. For example, whereas the material of the bottle was stated as being polyethylene terephthalate, it is clear that the invention can also be utilized in bottles manufactured from other polymers such as polypropylene, polyethylene, polystyrene, and polyethylene terephthalate glycol. Also, whereas the invention was stated for use with relation to one- and two-liter bottles it is clear that other bottles which utilize the base cup structure could also profit from the present invention. Thus the invention is declared to cover all changes and modifications of the specific examples of the invention herein disclosed for purposes of illustration, which do not constitute departures from the spirit and scope of the invention.

- 10 -

CLAIMS:

1.      A thermoplastic bottle for packaging pressurized liquids and having a pressure-resistant construction with a stable base portion, characterized in comprising :

a main bottle portion formed of a thermoplastic material and having a pressure-resistant bottom end; and,

a base cup having a stable bottom end, said base cup being friction-welded to said bottom end.

2.      The bottle of claim 1 characterized in that said base cup is pin-welded to said bottle portion.

3.      The bottle of claim 1 characterized in that said base cup is oscillatory-bonded to said bottle portion.

4.      A thermoplastic bottle for packaging pressurized liquids containing carbon dioxide under pressure, characterized in comprising :

a main body portion injection/blow molded from a thermoplastic material selected from the group comprising PET, PETG, polypropylene, polyethylene, polystyrene, PVC, PVdC, SAN, and EVAL;

said body portion having a pressure-resistant bottom end formed thereon; and,

a base cup formed of a weld-compatible thermoplastic material, adapted for snug-fitting engagement on said body portion, said base cup having a stable bottom end, and being friction-welded to said body portion.

5.      The thermoplastic bottle according to claim 4 characterized in that said base cup if formed primarily of a plastic which is friction-weldable to the plastic of said body portion and at least a portion of said base cup material comprises recycled scrap plastic.

6.      The thermoplastic bottle according to claim 5 characterized in that said body portion is formed of PET and said base cup is spin-welded to said body portion.

7.      The thermoplastic bottle according to claim 5, characterized in that said base cup is welded to said body portion by oscillatory welding.

- 11 -

8.      A method of forming thermoplastic containers, characterized in comprising:

injection forming a parison of a thermoplastic material;

blow molding said parison into a bottle having a pressure-resistant bottom end;

forming a base cup for snug-fitting engagement on said bottle bottom end, said base cup having a stable base portion at the bottom thereof; and,

friction-welding said base cup to said bottle portion to form a single container having a pressure-resistant, stable bottom portion.

9.      The method according to claim 8, characterized in that said bottle  portion is securely held in a first friction welding  mandrel and said base cup is secured inside a second  friction welding mandrel in coaxial alignment with said  first mandrel, and at least one of said mandrels is moved  axially toward and away from said other mandrel to engage said bottle and said base cup .

10.     The method according to claim 9 characterized in that  at least one of said mandrels is rotated at a preselected desired speed prior to engaging said bottle portion and said base cup.

11.     The method according to claim 9, characterized in that at least one of said mandrels is oscillated axially at a preselected  frequency for a predetermined desirable time period after said base cup is engaged with said bottle portion.

12.     A method of forming a stable base on a thermoplastic container having a rounded bottom, characterized in comprising:  selecting a base cup having a stable end portion and being formed of a thermoplastic material weldable  to said container, said base cup being sized for close-fitting telescopic engagement on said container;

aligning said base cup and said container in coaxial alignment ;

00124470

- 12 -

rotating at least one of said components; and,

bringing said components together axially to spin-weld them together.

13. A method of forming a stable base on a thermoplastic bottle having a non-stable bottom end, characterized in comprising :

providing a stable base cup for interference-fit engagement on said bottle end, made of a compatible material; and,

friction-welding said base cup to said bottle bottom end.

14. The method according to claim 13, characterized in that said friction-welding step comprises rotary spin-welding.

15. The method according to claim 13 characterized in that said friction-welding step comprises oscillatory welding.

00124470

1/1

FIG. 1

FIG. 3

FIG. 2

# 00124470

**European Patent Office**

## EUROPEAN SEARCH REPORT

Application number

EP 84 63 0068

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 351 020 (JAKOBSEN)<br>* Whole document *<br><br>--- | 1-15 | B 65 D 23/00 |
| X | US-A-4 293 359 (JAKOBSEN)<br>* Whole document *<br><br>--- | 1-15 | |
| A | GB-A-1 080 136 (BROWN MACHINE CO.)<br><br>----- | | |
| | | | **TECHNICAL FIELDS SEARCHED (Int. Cl. ³)**<br><br>B 65 D<br>B 29 D |

The present search report has been drawn up for all claims

| Place of search | Date of completion of the search | Examiner |
|---|---|---|
| THE HAGUE | 03-07-1984 | BENZE W.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82